# EUROPÄISCHE PATENTSCHRIFT

(11) **EP 2 032 402 B1**
(45) Veröffentlichungstag und Bekanntmachung des Hinweises auf die Patenterteilung: **18.12.2013**
(21) Anmeldenummer: 07728286.1
(22) Anmeldetag: 19.04.2007
(51) Int. Cl.: B60S 1/38

(54) **WISCHBLATT**
WIPER BLADE
BALAI D'ESSUIE-GLACE

(30) Priorität: 12.06.2006 DE 102006027439
(43) Veröffentlichungstag der Anmeldung: 11.03.2009
(73) Patentinhaber: Robert Bosch GmbH, 70442 Stuttgart (DE)
(72) Erfinder: DE BLOCK, Peter, B-3545 Halen (BE); WINDMOLDERS, Eric, B-3510 Kermt (BE); VERBOVEN, Wim, B-3980 Tessenderlo (BE)
(86) Internationale Anmeldenummer: PCT/EP2007/053826
(87) Internationale Veröffentlichungsnummer: WO 2007/144220

(56) Entgegenhaltungen:
- EP-A- 1 698 533
- DE-A1- 10 333 083
- DE-A1- 19 951 363

## Beschreibung

### Stand der Technik

Die Erfindung betrifft ein Wischblatt nach Gattung des unabhängigen Anspruchs.

Es sind schon zahlreiche Wischblätter bekannt, die eine gummielastische Wischleiste aufweisen, die durch mindestens eine Federschiene als Tragelement gehaltert ist. An den Enden der Längserstreckung der Federschiene oder der Wischleiste ist jeweils eine End-kappe befestigt. Diese dient als Abschluss des Wischblattes und kann beispielsweise auch die Wischleiste am Tragelement fixieren. Die Endkappen sind aus einem festen, stabilen Kunststoff als Spritzgussteil hergestellt. Im Betrieb liegt das Wischblatt auf einer Scheibe, beispielsweise der Windschutzscheibe eines Kraftfahrzeugs, auf und pendelt zur Beseitigung von Niedersclolag auf dieser hin und her.

Wird das Wischblatt von der Scheibe abgehoben, so kann es beim Wiederaufsetzen auf die Scheibe aufschlagen. Darüber hinaus wird das Wischblatt mit den Endkappen bei hohen Beschleunigungen, wie diese beispielsweise bei hohen Fahrgeschwindigkeiten und unter hoher Windlast auftreten können, häufig gegen die Windschutzscheibe gepresst. Hierbei können die harten Endkappen zerbrechen, was die Lebensdauer des Wischblattes vermindert.

Dokument EP-A-1698533 offenbart eine Endkappe wie in ersten Teil des Anspruchs 1 offenbart.

### Offenbarung der Erfindung

### Vorteile der Erfindung

Das erfindungsgemäße Wischblatt mit den Merkmalen des Hauptanspruchs hat den Vorteil, dass die Endkappe einen ersten energieabsorbierenden Bereich und einen zweiten, insbesondere stabilisierenden Bereich aufweist und wobei der energieabsorbierende Bereich aus einem weicheren Material ausgebildet ist als der zweite Bereich. Auf diese Weise ergibt sich für das erfin-dungsgemäße Wischblatt eine höhere Lebensdauer und damit eine höhere Betriebssicherheit und Betriebszuverlässigkeit.

Durch die in den Unteransprüchen aufgeführten Maßnahmen ergeben sich vorteilhafte Weiterbildungen und Verbesserungen der im Hauptanspruch angegebenen Merkmale.

Idealerweise weist die Wischleiste eine Wischlippe auf, die etwa parallel zum Tragelement verläuft, wobei der erste Bereich der Endkappe auf der gleichen Seite des Tragelementes wie die Wischlippe angeordnet ist. Dadurch ist der energieabsorbierende erste Bereich im Bereich der Wischlippe und damit im Bereich der Windschutzscheibe des Kraftfahrzeugs angeordnet, so dass die Endkappe bei einem Aufschlagen auf die Windschutzscheibe nicht zerstört wird.

Besonders einfach und kostengünstig ist die Endkappe in einem mehrkomponentigen, insbesondere zweikomponentigen Spritzgussverfahren hergestellt.

Als besonders wirksam hat sich vorteilhafrerweise ein thermoplastisches Elastomer für die Ausbildung des ersten Bereiches erwiesen.

Vorteilhafterweise weist der zweite Bereich ein Verbindungsmittel zur Verbindung der Endkappe mit dem Tragelement und/oder der Wischleiste auf, so dass die Endkappe sicher und zuverlässig mit dem Tragelement oder der Wischleiste verbunden ist.

### Zeichnungen

Ein Ausführungsbeispiel der Erfindung ist in den Zeichnungen dargestellt und in der nachfolgenden Beschreibung näher erläutert. Es zeigen:
- Figur 1: eine perspektivische Teilansicht eines Wischblattendes mit einer Endkappe in einer Explosionsdarstellung,
- Figur 2: einen Längsschnitt durch eine Endkappe eines erfindungsgemäßen Wischblattes und
- Figur 3: einen Querschnitt durch eine Endkappe eines erfindungsgemäßen Wischblattes.

### Beschreibung des Ausfübrungsbeispiels

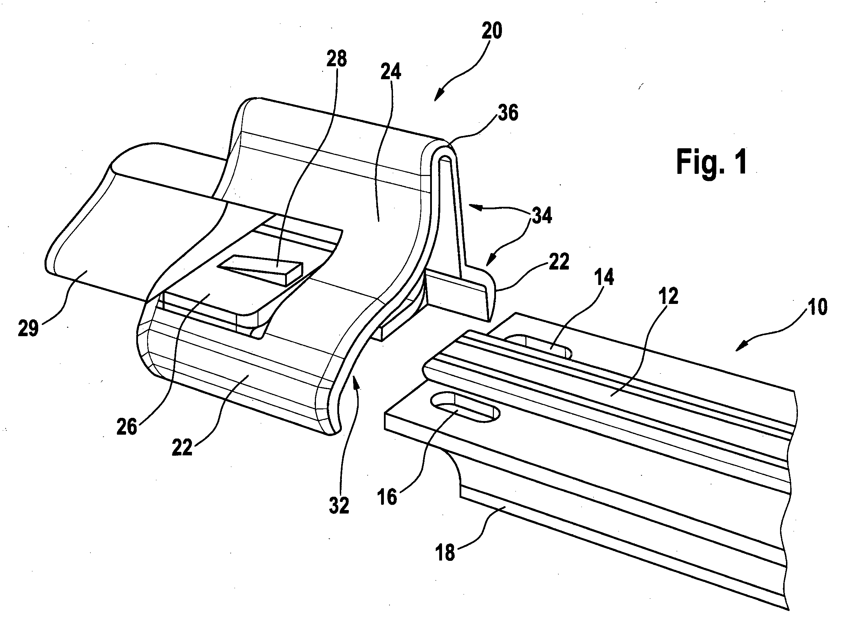

In Figur 1 ist ein Ende eines getenkfreien Wischblattes 10 dargestellt. Das andere Ende ist im Wesentlichen identisch aufgebaut und aus Gründen der Übersichtlichkeit weggelassen. Das Wischblatt 10 weist eine Wischleiste 12 auf, die aus einem elastomeren Werkstoff ausgebildet ist und somit gummielastische Eigenschaften aufweist. Die Wisch-leiste 12 ist zwischen zwei Federschienen 14, 16 gehaltert, die jeweils aus einem flachen Stahlband gebildet sind. Die Wischleiste 12 weist auf der Seite, die im Betrieb der Fahrzeugscheibe, beispielsweise der Windschutzscheibe, des Kraftfahrzeugs zugewandt ist und im Folgenden als Unterseite bezeichnet ist, eine Wischlippe 18 auf, die durch die pendelnde Bewegung des Wischblattes Feuchtigkeit von der Scheibe zu wischen vermag. Das longitudinale Ende des Wischblattes 10 wird durch jeweils eine Endkappe 20 gebildet, die auf die Federschienen 14, 16 am Ende ihrer Längserstreckung aufgeschoben ist. Die Federschienen 14, 16 bilden somit ein Tragelement, welches die Wischleiste 12 trägt. Auf der der Unterseite abgewandten Oberseite der Federschienen 14, 16 kann darüber hinaus eine Windabweisleiste an den Federschienen 14, 16 oder der Wischleiste 12 befestigt sein. Die Federschienen 14, 16 sind in eine Längsnut der Wischleiste 12 eingesetzt, so dass die Wischleiste 12 entlang ihrer gesamten Längserstreckung von den Federschienen 14, 16 getragen wird.

Die Endkappe 20 weist einen ersten, energieabsorbierenden Bereich 22 auf, der aus einem weichen thermoplastischen Elastomer besteht. Dieser erste Bereich 22 schließt die Endkappe 20 in Richtung der Wischlippe 18 und damit in Richtung der Scheibe des Kraftfahrzeuges kragenartig ab. Der übrige, zweite Bereich 24 stabilisiert die Endkappe 20 und ist aus einem härteren und damit spröderem Kunststoff als der des ersten Bereiches 22 ausgebildet. Im zweiten Bereich 24 ist zur Halterung der Endkappe auch eine Clipslasche 26 mit einer Rastnase 28 als Verbindungsmittel angeordnet, der der Befestigung und Fixierung der Endkappe 20 an der Wischleiste 12 dient. In einer Variation kann die Endkappe 20 natürlich auch am Tragelement, das heißt an den Federschienen 14, 16, befestigt sein.

Zur Fixierung der Clipslasche 26 ist noch ein Schieber 29 vorgesehen, der ein unbeabsichtigtes Lösen der Endkappe 20 von der Wischleiste 12 bzw. vom Tragelement verhindert.

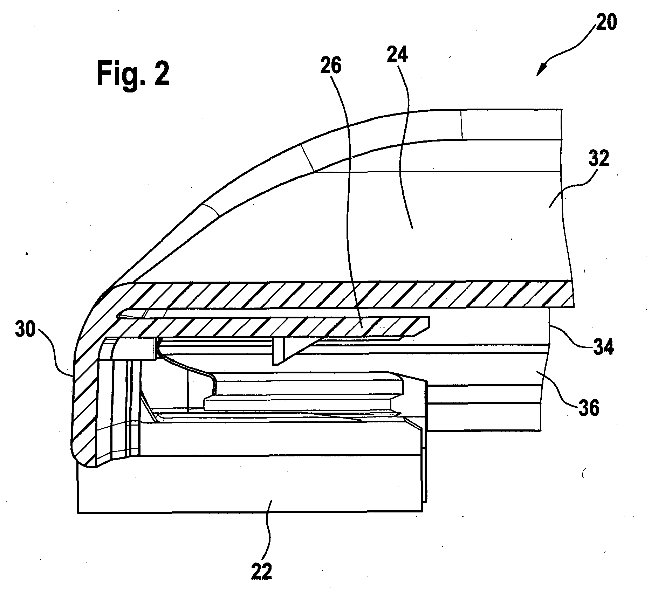

In Figur 2 ist eine Endkappe 20 in einem Längsschnitt im Detail dargestellt. Die Endkappe 20 umfasst im Wesentlichen den ersten Bereich 22, der aus einem weichen, energieabsorbierenden Material besteht, den zweiten stabilisierenden Bereich 24, der aus einem etwas härteren und daher spröderen Material besteht. Die Endkappe 20 ist im Wesentlichen wannenartig ausgeformt und dabei in Längsrichtung zur Mitte des Wischblattes 10 hin offen, so daß das longitudinale Ende der Wischleiste 12 mit den Federschienen 14, 16 von der Endkappe 20 teilweise aufgenommen werden kann. Das geschlossene Ende der Endkappe 20, das in Längsrichtung des Wischblattes 10 dieses nach außen hin abschließt, ist durch eine Stirnwand 30 abgeschlossen. Die Endkappe 20 ist daher im Querschnitt von im Wesentlichen umgekehrt v-förmiger Gestalt mit zwei Schenkelwänden 32, 34, die an einer Basis 36 miteinander verbunden sind und zwischen denen die Windabweisleiste aufgenommen werden kann. Im Bereich der beiden der Basis 36 abgewandten Enden der Seitenschenkel 32, 34 ist jeweils eine Längsnut 36 angeordnet, die die Federschienen 14, 16 auf der der Wischleiste 12 abgewandten Seite aufnehmen. Die Clipslasche 26 mit der rampenförmigen Rastnase 28 verläuft, vom äußeren Ende der Endkappe 20 ausgehend, parallel zur Längserstreckung der Wischleiste 12 innerhalb der Endkappe 20 und wenig oberhalb der Längsnut 36, so daß die Clipslasche 26 beim Aufschieben auf die Wischleiste 12 etwas nach oben gedrückt wird. So kann sich die Rastnase 28 an der Oberseite der Wischleiste 12 einhaken.

Unterhalb der Längsnut 36, und damit in Richtung der Wischlippe 18 bzw. in Richtung der Scheibe, gerichtet, ist der elastische erste Bereich 22 angeordnet, der einen kragenartigen Fortsatz der Endkappe 20 bildet. Der kragenartige Fortsatz muß natürlich nicht vollständig umlaufend ausgebildet sein. Wie in der Figur 2 zu sehen, kann dieser sich auch nur über einen Teilbereich der Seitenwände 32, 24 bzw. der Stirnwand 30 erstrecken. In einer Variation der Erfindung kann der elastische erste Bereich 22 auch nur, von der Stirnwand 30 ausgehend, nach unten hin, also in Richtung der Wischlippe 18, verlaufen. Analog kann der elastische, erste Bereich 22 auch nur von einer oder beiden der Schenkelwände 32, 34 verlaufen.

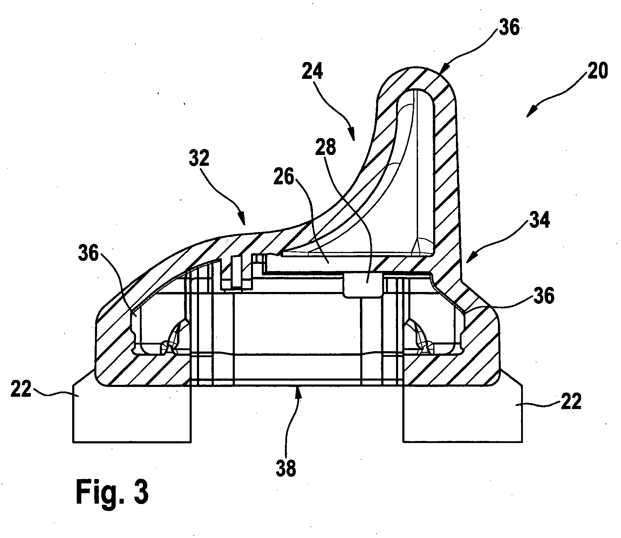

In Figur 3 ist eine Seitenansicht der Endkappe 20 eines erfindungsgemäßen Wischblattes 10 gezeigt. Die Seitenansicht ist hier von der, in Längsrichtung gesehen, Mitte des Wischblattes 10 in Richtung der Endkappe 20 gezeigt. Die Endkappe 20 ist von im Wesentlichen umgekehrt v-förmiger Gestalt mit der Basis 36, an der die beiden Seitenwände 32, 34 zusammengeführt sind. Diese bilden den zweiten stabilisierenden Bereich 24. Die erste Seitenwand 32 ist hierbei als Windabweisleiste ausgebildet und weist daher eine im Wesentlichen umgekehrt s-förmige Kontur auf. An die Seitenwände 32, 34 schließen sich, auf der der Basis 36 abgewandten Seite, die ersten elastischen Bereiche 22 an. Zur Stabilisierung sind die Enden der Seitenwände 32, 34 im Bereich der ersten Bereiche 22 durch eine Brücke 38 verbunden. Das damit hohle Innere vermag dadurch einen Körper mit einer Windabweisleiste aufzunehmen, der an den Federschienen 14, 16 oder an der Wischleiste 12 befestigt ist und sich zumindest teilweise über die Länge der Wischleiste 12 erstreckt. Die Seitenwände 32, 34 weisen darüber hinaus etwas oberhalb der Brücke 38 die Längsnut 36 auf, die der Aufnahme der Federschienen 14, 16 dient. Oberhalb der Längsnuten 36 ist die Clipslasche 26 mit der Rastnase 28 angeordnet.

Die Endkappe 20 ist einstückig aus Kunststoff im Spritzgussverfahren hergestellt. Zur Darstellung der ersten elastischen Bereiche 22 wurde hier ein Zweikomponentenspitzgussverfahren verwandt. Selbstverständlich können die elastischen Bereiche 22 auch aufgeklebt oder aufgesteckt oder in anderer Weise form- und/oder kraftschlüssig befestigt werden.

Schlagen im Betrieb die Endkappen 20 auf die zu wischende Scheibe auf, so wird dieser Schlag durch die elastischen ersten Bereiche 22 abgedämpft und die Energie aus dem Schlag derart absorbiert, dass der zweite stabilisierende Bereich 24 der Endkappe geschützt ist und ein Zerbrechen der Endkappe vermieden wird. Hierzu kann in einer Variation der Erfindung die Endkappe 20 auch mit einer energieabsorbierenden Schicht, als elastischer Bereich 22, umhüllt werden. In einer weiteren Variation kann beispielsweise ein Metallclips, ähnlich einem Gerippe, der zur Befestigung der Endkappe dient, mit einem elastischen Kunststoff umspritzt werden, so dass die Form der Endkappe 20 durch elastisches Material gebildet wird und der zweite stabilisierende Bereich lediglich aus einer Metallklammer besteht. In einer weiteren Variation kann die Metallklammer auch aus einem geeigneten Kunststoff ausgebildet sein.

## Patentansprüche

1. Wischblatt (10) mit einer gummielastischen Wischleiste (12), die durch mindestens eine Federschiene (14, 16) als Tragelement gehaltert ist, und mindestens einer Endkappe (20) die an mindestens einem Ende der Längserstreckung des Tragelementes befestigt ist, wobei die Endkappe (20) wenigstens einen ersten, energieabsorbierenden Bereich (22) und einen zweiten, insbesondere stabilisierenden Bereich (24) aufweist, **dadurch gekennzeichnet, dass** der erste energieabsorbierende Bereich (22) aus einem weicheren Material besteht als der zweite Bereich (24).

2. Wischblatt (10) nach mindestens einem der vorhergehenden Ansprüche, **dadurch gekennzeichnet, dass** die Wischleiste (12) eine Wischlippe (18) aufweist, die etwa parallel zum Tragelement verläuft, und der erste Bereich (22) der Endkappe (20) auf der gleichen Seite des Tragelementes wie die Wischlippe (18) angeordnet ist.

3. Wischblatt (10) nach mindestens einem der vorhergehenden Ansprüche, **dadurch gekennzeichnet, dass** die Endkappe (20) in einem mehrkomponentigen, insbesondere zweikomponentigen, Spritzgussverfahren hergestellt ist.

4. Wischblatt (10) nach mindestens einem der vorhergehenden Ansprüche, **dadurch gekennzeichnet, dass** der erste Bereich (22) ein thermoplastisches Elastomer umfasst.

5. Wischblatt (10) nach mindestens einem der vorhergehenden Ansprüche, **dadurch gekennzeichnet, dass** der zweite Bereich (24) ein Verbindungsmittel (26, 28) zur Verbindung der Endkappe (20) mit dem Tragelement und/oder der Wischleiste (12) umfasst.

## Claims

1. Wiper blade (10) having a rubber-elastic wiper strip (12), which is supported by at least one spring bar (14, 16) as supporting element, and having at least one end cap (20), which is attached to at least one end of the longitudinal extent of the supporting element, wherein the end cap (20) comprises at least one first, energyabsorbing area (22) and one second, in particular stabilizing area (24) **characterized in that** the first, energy-absorbing area (22) consists of a more flexible material than the second area (24).

2. Wiper blade (10) according to Claim 1, **characterized in that** the wiper strip (12) comprises a wiper lip (18), which extends approximately parallel to the supporting element, and the first area (22) of the end cap (20) is arranged on the same side of the supporting element as the wiper lip (18).

3. Wiper blade (10) according to at least one of the preceding claims, **characterized in that** the end cap (20) is produced using a multicomponent, in particular two-component, injection molding method.

4. Wiper blade (10) according to at least one of the preceding claims, **characterized in that** the first area (22) comprises a thermoplastic elastomer.

5. Wiper blade (10) according to at least one of the preceding claims, **characterized in that** the second area (24) comprises a connecting means (26, 28) for connecting the end cap (20) to the supporting element and/or the wiper strip (12).

## Revendications

1. Balai d'essuie-glace (10) comprenant une raclette de balai d'essuie-glace (12) présentant l'élasticité du caoutchouc, laquelle est supportée par au moins un rail élastique (14, 16) faisant office d'élément de support, et au moins un capuchon d'extrémité (20) qui est fixé à au moins une extrémité de l'étendue longitudinale de l'élément de support, le capuchon d'extrémité (20) comprenant au moins une première région (22) absorbant de l'énergie et une deuxième région (24) en particulier stabilisante, **caractérisé en ce que** la première région (22) absorbant de l'énergie est constituée d'un matériau plus flexible que celui de la deuxième région (24).

2. Balai d'essuie-glace (10) selon la revendication 1, **caractérisé en ce que** la raclette de balai d'essuie-glace (12) comprend une lèvre de balai d'essuie-glace (18) qui s'étend approximativement parallèlement à l'élément de support et la première région (22) du capuchon d'extrémité (20) est disposée du même côté de l'élément de support que la lèvre de balai d'essuie-glace (18).

3. Balai d'essuie-glace (10) selon au moins l'une quelconque des revendications précédentes, **caractérisé en ce que** le capuchon d'extrémité (20) est fabriqué au moyen d'un procédé de moulage par injection à plusieurs composants, en particulier à deux composants.

4. Balai d'essuie-glace (10) selon au moins l'une quelconque des revendications précédentes, **caractérisé en ce que** la première région (22) comporte un élastomère thermoplastique.

5. Balai d'essuie-glace (10) selon au moins l'une quelconque des revendications précédentes, **caractérisé en ce que** la deuxième région (24) comporte un moyen de liaison (26, 28) pour la liaison du capuchon d'extrémité (20) à l'élément de support et/ou à la raclette de balai d'essuieglace (12).
